(19) Europäisches Patentamt
European Patent Office
Office européen des brevets

(11) **EP 2 934 806 B1**

(12) **EUROPÄISCHE PATENTSCHRIFT**

(45) Veröffentlichungstag und Bekanntmachung des Hinweises auf die Patenterteilung:
**15.08.2018   Patentblatt 2018/33**

(21) Anmeldenummer: **13824480.1**

(22) Anmeldetag: **09.12.2013**

(51) Int Cl.:
***B23K 15/00*** *(2006.01)*   ***B23K 20/12*** *(2006.01)*
***B23K 26/34*** *(2014.01)*

(86) Internationale Anmeldenummer:
**PCT/DE2013/000787**

(87) Internationale Veröffentlichungsnummer:
**WO 2014/094708 (26.06.2014 Gazette 2014/26)**

(54) **REIBRÜHRWERKZEUG, HERSTELLVERFAHREN HIERFÜR UND REIBRÜHRVERFAHREN**

FRICTION STIR WELDING TOOL, METHOD FOR MANUFACTURING THE SAME, AND FRICTION STIR WELDING METHOD

OUTIL POUR LE SOUDAGE PAR FRICTION-MALAXAGE, SON PROCÉDÉ DE PRODUCTION ET PROCÉDÉ DE SOUDAGE PAR FRICTION-MALAXAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2012   DE 102012025140**

(43) Veröffentlichungstag der Anmeldung:
**28.10.2015   Patentblatt 2015/44**

(73) Patentinhaber: **Airbus Defence and Space GmbH 85521 Ottobrunn (DE)**

(72) Erfinder:
 • **SILVANUS, Jürgen**
   **82008 Unterhaching (DE)**
 • **BRUNZEL, Tommy**
   **08393 Meerane (DE)**
 • **SCHMIDKE, Katja**
   **81539 München (DE)**

(74) Vertreter: **Kastel, Stefan Kastel Patentanwälte St.-Cajetan-Straße 41 81669 München (DE)**

(56) Entgegenhaltungen:
WO-A2-2006/116288       FR-A3- 2 916 993
GB-A- 2 306 366         US-A1- 2003 209 588
US-A1- 2006 065 694     US-A1- 2009 212 089
US-A1- 2012 248 175     US-B1- 6 676 004

• W M Thomas ET AL: "Friction stir welding - self-reacting stir welding, bobbin stir welding and friction stir-lock welding", , 26. Oktober 2007 (2007-10-26), XP055120933, INALCO 2007, Tokyo, Japan Gefunden im Internet: URL:http://www.twi-global.com/technical-kn owledge/published-papers/friction-stir-wel ding-process-variants-an-update-october-20 07/ [gefunden am 2014-05-30]
• Ouyang ET AL: "Application of Laser-based Additive Manufacturing to Production of Tools for Friction Stir Welding", Materials & Design, 7 August 2002 (2002-08-07), XP055431337, AMSTERDAM, NL ISSN: 0264-1275, DOI: https://sffsymposium.engr.utexas.edu/Manus cripts/2002/2002-08-Ouyang.pdf

**Beschreibung**

Die Erfindung betrifft ein Reibrührwerkzeug, umfassend einen ersten Werkzeugkörper zum Vorsehen einer ersten Schulter und eine vom ersten Werkzeugkörper abstehende und gegenüber dem Außendurchmesser des ersten Werkzeugkörpers einen kleineren Außendurchmesser aufweisende Pinausbildung. Weiter betrifft die Erfindung ein Herstellverfahren für ein solches Reibrührwerkzeug, sowie ein Reibrührverfahren. Ein derartiges Reibrührwerkzeug ist insbesondere zum Reibrührschweißen verwendbar, aber auch ein Einsatz zum sogenannten "Reibrühr-Processing" ist denkbar.

Das Reibrührschweißen oder "Friction Stir Welding" (FSW) wird bekanntlich zunehmend in der Luft- und Raumfahrttechnik, in der Schienenverkehrstechnik, in der Unterhaltungselektronik, Haushaltswaren sowie im Automobilbau eingesetzt. Dieses Fügeverfahren zeichnet sich durch sein hohes Automatisierungspotenzial, einen hohen schweißtechnischen Wirkungsgrad (Festigkeit $\sigma$ und Dehnung $\varepsilon$) sowie den Wegfall des Erfordernisses von Nieten aus, wodurch die Herstellungskosten gesenkt werden und das Gewicht daraus hergestellter Strukturen reduziert wird.

Beim Reibrührschweißen, wie es beispielsweise in der WO 93/10935 A1 beschrieben ist, werden mehrere miteinander zu verschweißende Werkstücke in Kontakt gebracht und in dieser Position gehalten. In dem Verbindungsbereich der Werkstücke wird unter drehender Bewegung ein Schweißstift oder ein stiftförmiger Vorsprung eines entsprechenden Werkzeuges eingeführt, bis eine oberhalb des Schweißstiftes an dem Werkzeug angeordnete Schulter auf der Oberfläche der Werkstücke aufliegt. Der Schweißstift wird allgemein auch als "Pin" bezeichnet. Die Schulter ist am Werkzeugkörper angebracht, von dem der Schweißstift absteht. Liegt die Schulter auf der Oberfläche der Werkstücke auf und ist der drehende Schweißstift oder der drehende Pin eingeführt, wird durch die Relativbewegung zwischen Werkzeug und Werkstücken Reibungswärme generiert, sodass benachbarte Werkstoffbereiche im Verbindungsbereich einen plastifizierten Zustand einnehmen. Das Werkzeug wird, während der rotierende Pin in Kontakt mit dem Verbindungsbereich steht, entlang der Verbindungslinie der Werkstücke vorwärtsbewegt, so dass der sich um den Schweißstift befindende Werkstoff plastifiziert und anschließend konsolidiert. Bevor das Material völlig erhärtet, wird der Schweißstift aus dem Verbindungsbereich beziehungsweise den Verbindungsstücken entfernt. Durch die Schulter, die während des Schweißens in Kontakt mit der Werkstückoberfläche ist, wird zusätzliche Reibwärme erzeugt, und ein Entweichen plastifizierten Materials kann verhindert werden.

Durch Reibrührschweißen können Materialien, wie beispielsweise Metalle, deren Legierungen, Metallverbundmaterialien oder geeignete Kunststoffmaterialien als Stumpfstoßverbindung, Überlappstoßverbindung oder T-Stoßverbindung geschweißt werden. Es können auch Punktverbindungen erzeugt werden, wobei eine Vorwärtsbewegung des rotierenden mit dem Verbindungsbereich in Kontakt stehenden Pins beziehungsweise eine translatorische Relativbewegung zwischen rotierendem Pin und Werkstücken entfällt.

Die Technik des Reibrührens kann aber auch beim Reparieren, Bearbeiten und Veredeln von Werkstücken Anwendung finden, was üblicherweise als "Reibrühr-Processing" oder "Friction-Stir-Processing" bezeichnet wird. Dabei wird, wie oben beschrieben, ein stiftförmiger Vorsprung - "Pin" - unter drehender Bewegung in zumindest ein Werkstück eingeführt (d.h. es wird im Vollen geschweißt), um das Werkstückmaterial wenigstens im Kontaktbereich des Pins zu modifizieren. Zu Reparaturzwecken wird der rotierende Pin beispielsweise in einen Riss eines Werkstückes eingeführt, um nur ein Anwendungsbeispiel zu nennen. Alle Prozesse, bei denen die Technik des Reibrührens eingesetzt wird, was insbesondere Reibrührschweißverfahren sowie Reibrühr-Processing-Verfahren beinhaltet, werden im Folgenden als "Reibrührverfahren" bezeichnet.

Für solche Prozesse können z.B. Reibrührwerkzeuge mit einer Schulter und einem davon frei endend vorstehenden Pin zum Einsatz kommen, wie sie in der WO 93/10935 A1 oder in der DE 10 2005 030800 B4 beschrieben sind. Weitere Beispiele für solche Reibrührwerkzeuge finden sich in der DE 101 39687 C1 oder der DE 100 35332 C2.

Aus der WO 93/10935 A1 ist ein Reibrührwerkzeug mit zwei Schultern bekannt. Die zu bearbeitenden Werkstücke werden zwischen die Schultern eingespannt und durch den als Steg zwischen den Schultern gebildeten Pin durchgriffen.Der Pin verbindet die zwei Schultern und hat eine kreisrunde Umrisskontur. Bei derartigen üblichen Reibrührschweißwerkzeugen kann der Pin nur bis zu einem gewissen maximalen Durchmesser dimensioniert werden, beispielsweise hängt die Dimensionierung des Pins von der zu schweißenden Stoßdicke ab. Wenn bei Vergrößerung des Durchmessers des Pins dessen Stabilität dennoch nicht ausreichend sichergestellt werden kann, können die Werkstücke nicht verschweißt werden.

Aufgrund der hohen Biege- und Scherbelastung des Pins solcher Zwei-Schulter-Reibrührwerkzeuge ist deren Stabilität nicht für alle gewünschten Reibrührverfahren ausreichend.

Aus der DE 100 31 689 B4 ist ein Zwei-Schulter-Reibrührwerkzeug mit einer Multi-Pin-Geometrie bekannt. Hierzu wird ein einzelner von einem ersten Werkzeugkörper abstehender Pin durch eine Bohrung oder ein sonstiges spanabhebendes Verfahren in mehrere verbleibende Pins geteilt. An diese Pins wird dann ein weiterer Werkzeugkörper befestigt. Damit lassen sich zwar Werkstücke mittels Reibrührschweißen verbinden, die Stabilität der Mulit-Pin-Geometrie aus der DE 100 31 689 B4 kann jedoch nicht gewährleistet werden. Insbesondere wird dadurch, dass ein einzelner Pin in mehrere Segmente geteilt wird, der Querschnitt geschwächt.

Aus der US 2009/0212089 A1 ist ein Ultraschallschweißwerkzeug zum Verbinden von Werkstücken mittels Ultraschallschweißen bekannt. Beim Ultraschallschweißen wird Ultraschallenergie mit dem Ultraschallschweißwerkzeug, das auch als Sonotrode oder Ultraschallhorn bezeichnet werden kann, auf ein Werkstück aufgebracht. Das Werkzeug bringt die Werkstücke zum Schwingen. Die Ultraschallschwingungen zwischen den Werkzeugen erzeugt Wärme, die zum Schweißen der Werkstücke führt. Das bekannte Ultraschallschweißwerkzeug ist in Pulvermetallurgie durch Kompaktieren eines Pulvermaterials zu einem Grünling und anschließenden Sinterns des Grünlings hergestellt. Das Ultraschallschweißwerkzeug weist einen Körper mit einem Schulterbereich und eine vorstehende Schweißspitze auf. Die Schweißspitze kann auch mehrere Abflachungen aufweisen.

Aus der GB 2 306 366 A ist ein Reibrührschweißwerkzeug mit einem einzelnen Werkzeugkörper und einer davon vorstehenden Pinausbildung bekannt. Die Pinausbildung kann ganz unterschiedliche Formen haben, beispielsweise kann ein einzelner Pin einen variierenden Durchmesser zum Ermöglichen eines guten plastischen Umfließens des plastifizierten Materials aufweisen. Gemäß weiteren Ausführungsbeispielen weist die Pinausbildung aus dem gleichen Grund mehrere von der Drehachse exzentrisch ausgebildete Pins auf.

Aus der US 2006/0065694 A1 ist ein Mehr-Schulter-Werkzeug bekannt, wobei ein erster Werkzeugkörper und ein zweiter Werkzeugkörper mit einer Pinausbildung, die aus einem einzelnen Pin gebildet ist, miteinander verbunden sind. Es ist bereits angesprochen, dass der Pin einer extremen Belastung ausgesetzt sein kann und brechen kann. Als Lösung wird vorgeschlagen, dass die Pinausbildung auf Druck verspannt wird. Hierzu wird ein durchgehender Gewindestift zum Verspannen vorgeschlagen, worauf eine den Pin bildende Hülse aufgesetzt wird und wobei auf diese Hülse zwei Schulterkörper mittels Gewindeeingriff aufgebracht werden. Aus der US 6 676 004 B1 ist ein Reibrührwerkzeug mit einer einzelnen Schulter und einem davon vorstehenden Stift vorgeschlagen, wobei der Stift und der die Schulter vorsehende Schulterkörper integral mit einem abgerundeten Übergang ausgebildet sind und wobei durch Sandstrahlen oder chemischer Prozesse Druckspannungen eingebracht werden.

Aus der US 2003/0209588 A1 ist ein Zwei-Schulter-Reibrührwerkzeug bekannt, wobei die Pinausbildung mit einem oberen Körper und einem unteren Körper durch Fügetechniken verbunden ist.

Aus der US 2012/0248175 A1 ist ein Reibrührwerkzeug mit einem einzelnen Werkzeugkörper und einem davon vorstehenden einzelnen Pin bekannt, wobei eine Oberfläche mit einer mittels PVD oder CVD aufgebrachten Beschichtung beschichtet ist.

In der Firmendruckschrift "Friction Stir Welding - Technical Handbook" der Firma ESAB AB, die den Oberbegriff vom Anspruch 1 offenbart, ist in einer Figur ein Zwei-Schulter-Werkzeug mit einem ersten Werkzeugkörper und einem zweiten Werkzeugkörper und einer Pinausbildung dazwischen mit unrundem Querschnitt dargestellt. Wie die Verbindung zwischen den Werkzeugkörpern und der Pinausbildung ausgebildet ist, ist nicht ersichtlich.

Aus der FR 2 916 993 ist ein Reibrührschweißwerkzeug mit nur einer Schulter und einer davon vorstehenden Pinausbildung bekannt, wobei entlang der Drehachse unterschiedliche Materialschichten durch thermischen Auftrag, insbesondere durch Laserspritzen, aufgetragen sind.

Aus "Ouyang ET AL: "Application of Laser-based Additive Manufacturing to Production of Tools for Friction Stir Welding", Materials & Design, 7. August 2002, XP055431337, ISSN:0264-1275", die den Oberbegriff vom Anspruch 5 offenbart, ist die Anwendung eines generativen Fertigungsverfahrens zur Herstellung eines Einschulterwerkzeuges für Reibrührschweißen bekannt.

Aus der WO 2006/116288 A2 ist ein Vorrichtung zum Reibrührschweißen mit mehreren drehbaren Stiften bekannt.

Aufgabe der Erfindung ist es, ein an eine durchzuführende Reibrühraufgabe besser belastungsoptimiert anpassbares Reibrührwerkzeug zu schaffen. Insbesondere soll damit eine größere Vielfalt von Materialverbindungen durch Reibrührschweißen möglich sein.

Diese Aufgabe wird durch ein Reibrührwerkzeug gemäß Anspruch 1 sowie durch ein Herstellverfahren für ein Reibrührwerkzeug und ein Reibrührverfahren gemäß den nebengeordneten Ansprüchen gelöst.

Vorteilhafte Ausgestaltungen der Erfindung sind Gegenstand der Unteransprüche.

Gemäß einem ersten Aspekt schafft die Erfindung ein Reibrührwerkzeug, umfassend einen ersten Werkzeugkörper zum Vorsehen einer ersten Schulter, eine vom ersten Werkzeugkörper abstehende und gegenüber dem Außendurchmesser des ersten Werkzeugkörpers einen kleineren Außendurchmesser aufweisende Pinausbildung und einen durch die Pinausbildung mit dem ersten Werkzeugkörper verbundenen zweiten Werkzeugkörper zum Vorsehen einer zweiten Schulter, so dass das Reibrührwerkzeug als Zwei-Schulter-Werkzeug ausgebildet ist, wobei die Pinausbildung im Querschnitt eine von einer gleichmäßigen kreisförmigen Verteilung abweichende Materialverteilung aufweist, dadurch gekennzeichnet, dass der erste Werkzeugkörper, die Pinausbildung und der zweite Werkzeugkörper aus einem monolithischen oder einstückigen Block zusammen integral derart gebildet sind, dass die Pinausbildung wenigstens drei vom ersten Werkzeugkörper abstehende Pins aufweist. Gemäß einer bevorzugten Ausgestaltung schafft die Erfindung ein Reibrührwerkzeug bei dem Werkzeugkörper und die Pinausbildung als integrales Bauteil mittels einem generativen Fertigungsverfahren gebildet sind.

Die integrale Ausbildung des oder der Werkzeugkörper und der Pinausbildung umfasst eine monolithische Ausbildung, eine einstückige Ausbildung oder eine funktionsintegrierte Ausbildung. Beim generativen Fertigungsverfahren wird der oder die Werkzeugkörper oder die Pinausbildung schichtweise aufgebaut, um die integrale Ausbildung zu bilden. Insbesondere ist der oder die Werkzeugkörper und die Pinausbildung ohne Füge- oder Trennstellen gebildet.

Es ist bevorzugt, dass die Pinausbildung im Querschnitt eine von einer gleichmäßigen kreisförmigen Verteilung abweichende Materialverteilung aufweist.

Bei dem erfindungsgemäßen Reibrührwerkzeug ist hierzu vorgesehen, dass die Pinausbildung wenigstens drei vom ersten Werkzeugkörper vorstehende Pins aufweist.

Bei dem erfindungsgemäßen Reibrührwerkzeug ist ein zweiter Werkzeugkörper vorgesehen, der mittels der Pinausbildung mit dem ersten Werkzeugkörper verbunden ist, wobei der erste Werkzeugkörper, der zweite Werkzeugkörper und die Pinausbildung integral vorzugsweise durch das generative Fertigungsverfahren gebildet sind. Ein belastungsoptimiertes Zwei-Schulter- Reibrührschweißwerkzeug ist vorgesehen.

Es ist bevorzugt, dass an dem ersten Werkzeugkörper eine erste Schulter vorgesehen ist und an dem zweiten Werkzeugkörper eine zweite Schulter vorgesehen ist und dass die erste und die zweite Schulter durch die mehreren beabstandet zueinander ausgebildeten Pins verbunden sind.

Es ist bevorzugt, dass am ersten Werkzeugkörper eine erste Schulter vorgesehen ist, wobei die erste Schulter integral am ersten Werkzeugkörper oder an einem gesonderten Bauteil ausgebildet ist, wobei das Bauteil eine Drehzahl gleich Null relativ zum ersten Werkzeugkörper aufweist und dass an dem zweiten Werkzeugkörper eine zweite Schulter vorgesehen ist und dass der erste Werkzeugkörper und die zweite Schulter durch die mehreren beabstandet zueinander ausgebildeten Pins integral verbunden sind. Das Bauteil ist insbesondere feststehend oder stillstehend ausgebildet, so dass es relativ zum ersten Werkzeugkörper als auch relativ zu den zu verschweißenden Werkstücken keine Drehbewegung ausführt. Mit anderen Worten kann die als gesondertes Bauteil ausgebildete erste Schulter drehfrei im oder am Reibrührwerkzeug angeordnet oder befestigt sein.

Es ist bevorzugt, dass das Reibrührwerkzeug eine sich z.B. axial und/oder radial - insbesondere allmählich - verändernde Materialzusammensetzung aufweist.

Gemäß einem weiteren Aspekt schafft die Erfindung ein Herstellverfahren zum Herstellen eines Reibrührwerkzeugs, das wenigstens einen ersten Werkzeugkörper sowie eine vom ersten Werkzeugkörper abstehende Pinausbildung aufweist, gekennzeichnet durch integrale Herstellung wenigstens des ersten Werkzeugkörpers und der Pinausbildung mittels eines generativen Fertigungsverfahrens.

Die integrale Ausbildung des oder der Werkzeugkörper oder der Pinausbildung umfasst eine monolithische Ausbildung, eine einstückige Ausbildung oder eine funktionsintegrierte Ausbildung. Beim generativen Fertigungsverfahren wird der oder die Werkzeugkörper oder die Pinausbildung schichtweise aufgebaut, um die integrale Ausbildung zu bilden. Insbesondere ist der oder die Werkzeugkörper und/oder die Pinausbildung ohne Füge- oder Trennstellen hergestellt oder geformt.

Das erfindungsgemäße Herstellverfahren ist gekennzeichnet durch integrale Fertigung des ersten Werkzeugkörpers, der Pinausbildung und eines über der Pinausbildung mit dem ersten Werkzeugkörper verbundenen zweiten Werkzeugkörpers mittels eines generativen Fertigungsverfahrens.

Dabei wird das generative Fertigungsverfahren derart durchgeführt, dass mehr als zwei beabstandet zueinander angeordnete vom ersten Werkzeugkörper abstehende Pins angefertigt werden, die die Pinausbildung bilden.

Eine bevorzugte Ausgestaltung des Herstellverfahrens zeichnet sich aus durch Verwenden eines pulverbasierten Verfahrens als generatives Fertigungsverfahren. Vorteilhaft wird ein Laser- oder Elektronenstrahl als Wärmequelle zum Aufschmelzen eines Metallpulvers oder Metalllegierungspulvers verwendet. Beispielsweise kann ein Pulverbettverfahren verwendet werden, bei dem das Metallpulver oder Metalllegierungspulver schichtweise aufgetragen und mittels der Wärmequelle aufgeschmolzen wird. Alternativ oder in Kombination zum Pulverbettverfahren kann das Metallpulver oder Metalllegierungspulver mittels wenigstens einer Pulverdüse verdüst und schichtweise aufgetragen werden.

Eine bevorzugte Ausgestaltung des Herstellverfahrens, die zum Herstellen eines Reibrührwerkzeugs für eine vorgegebene Reibrührschweißaufgabe dient, ist gekennzeichnet durch Abschätzen oder Berechnen der bei der Reibrührschweißaufgabe auf die Pinausbildung wirkenden Belastungen und

Bestimmen einer - insbesondere sich über den Gesamtquerschnitt der Pinausbildung ändernden - Materialverteilung der Pinausbildung in Abhängigkeit von den abgeschätzten oder berechneten Belastungen und

Durchführen des generativen Fertigungsverfahrens derart, dass die Pinausbildung mit der bestimmten Materialverteilung hergestellt wird.

Es ist bevorzugt, dass das Bestimmen der Materialverteilung umfasst:

a) Auswahl einer Anzahl von beabstandeten Pins, die gemeinsam die Pinausbildung bilden,
b) Auswahl einer Querschnittskontur und/oder eines Druckmessers für wenigstens einen von mehreren beabstandeten Pins, die gemeinsam die Pinausbildung bilden, und/oder
c) Bestimmen der Anordnung und/oder der Abstände mehrerer Pins, die gemeinsam die Pinausbildung bilden, und/oder

d) Auswahl einer sich axial und/oder radial ändernden Materialverteilung, z.B. eines Gradientenmaterials für wenigstens einen Pin der Pinausbildung.

Eine vorteilhafte Ausgestaltung des Herstellverfahrens ist gekennzeichnet durch Verwenden unterschiedlicher Materialien und/oder unterschiedlicher Materialkombinationen in dem generativen Fertigungsverfahren an unterschiedlichen Stellen des Reibrührwerkzeugs, um so wenigstens eine sich in dem Reibrührwerkzeug - z.B. radial oder axial - verändernde Materialeigenschaft zu erhalten.

Gemäß einem weiteren Aspekt schafft die Erfindung ein Reibrührverfahren, bei dem Reibrühren mittels eines Reibrührwerkzeugs nach der Erfindung oder deren vorteilhaften Ausgestaltungen durchgeführt wird und/oder bei dem das Reibrühren mittels eines Reibrührwerkzeugs durchgeführt, das mit dem erfindungsgemäßen Herstellungsverfahren oder einer seiner vorteilhaften Ausführungsformen hergestellt worden ist, durchgeführt wird. Die Werkzeugkörper und die Pinausbildung, werden, insbesondere durch ein generatives Fertigungsverfahren oder durch andere Verfahren, wie z.B. Gießen oder dergleichen als integrales oder monolithisches Bauteil hergestellt. Der erste Werkzeug körper, der zweite Werkzeugkörper und die die Werkzeugkörper verbindende Pinausbildung werden aus einem monolithischen Block zusammen integral hergestellt. Dadurch gibt es keinerlei Trennstellen oder Schwächungen, wie sie durch spanabhebende Verfahren verursacht werden könnten. Dies ermöglicht, enorme Belastungen aufzunehmen, die in einem Zwei-Schulter-Werkzeug insbesondere im Bereich des Überganges zwischen Werkzeugkörper und Pinausbildung auftreten können. Erst dadurch werden viele Schweißaufgaben ermöglicht, die bisher nicht mittels Reibrührschweißen durchführbar waren.

Durch das generative Fertigungsverfahren kann insbesondere das Material der Pinausbildung belastungsoptimiert verteilt werden, z.B. optimiert auf eine bestimmte Reibrühraufgabe. So kann z.B. die Umrisskontur der Pinausbildung von einer reinen Kreisform abweichen. Beispielsweise lässt sich leicht eine Pinausbildung mit mehreren Pins, mit gleichen oder unterschiedlichen Querschnitten, jeweils mit kreisförmigem Querschnitt oder anderen Querschnitten herstellen. Weiter kann beispielsweise für die Pinausbildung auch eine sich über den Querschnitt ändernde Materialzusammensetzung erhalten werden.

Insbesondere lassen sich als Pinausbildung auch kompliziertere Umrissformen ohne Querschnittsschwächung herstellen. Es kann insbesondere ein Pin mit einer von einer einzelnen Kreisform abweichenden Umrisskonturform integral mit dem ersten Werkzeugkörper hergestellt werden. Als Pinausbildung wird eine Mehrzahl, mehr als zwei, von entsprechenden dünneren Pins verwendet, die zusammen mit wenigstens dem ersten Werkzeugkörper in einem generativen Fertigungsverfahren als integrales Bauteil hergestellt werden. Statt einem einzelnen dicken Pin werden eine Vielzahl, größer zwei, von dünnen Pins verwendet.

Besonders bevorzugt ist das Reibrührwerkzeug ein Mehrschulterwerkzeug, wobei mehrere Werkzeugkörper durch eine oder mehrere Pinausbildungen miteinander verbunden sind. An den jeweiligen Werkzeugkörpern kann jeweils eine Schulter ausgebildet sein. Die Schulter kann jeweils einstückig unmittelbar an dem Werkzeugkörper ausgebildet sein. Es ist aber auch möglich, dass die Schulter an einem gesonderten Bauteil ausgebildet ist, wobei das Bauteil eine Drehzahl gleich Null relativ zum ersten Werkzeugkörper aufweist. Das Bauteil ist insbesondere feststehend oder stillstehend ausgebildet, so dass es relativ zum ersten Werkzeugkörper als auch relativ zu den zu verschweißenden Werkstücken keine Drehbewegung ausführt. Mit anderen Worten kann die als gesondertes Bauteil ausgebildete Schulter drehfrei im oder am Reibrührwerkzeug angeordnet oder befestigt sein. Mehrere dünne Pins verbinden die Werkzeugkörper. Eine Vielzahl, d.h. mehr als zwei, von Pins werden verwendet, um die Werkzeugschultern miteinander zu verbinden. Diese Kombination aus mehreren Schultern und mehreren Pins wird ebenfalls mittels additiver Fertigung oder mittels generativen Fertigungsverfahren als Integralbauteil hergestellt.

Bevorzugt werden als generative Fertigungsverfahren pulverbasierte Verfahren verwendet. Vorteilhaft wird ein Laser- oder Elektronenstrahl als Wärmequelle zum Aufschmelzen eines Metallpulvers oder Metalllegierungspulvers verwendet. Beispielsweise kann ein Pulverbettverfahren verwendet, bei dem das Metallpulver oder Metalllegierungspulver schichtweise aufgetragen und mittels der Wärmequelle aufgeschmolzen wird. Alternativ oder in Kombination zum Pulverbettverfahren kann das Metallpulver oder Metalllegierungspulver mittels wenigstens einer Pulverdüse verdüst und schichtweise aufgetragen werden.

Die Gestalt des Reibrührwerkzeugs kann mittels generativen Fertigungsverfahren der auftretenden Belastung optimal angepasst werden. Die Geometrie und der Querschnitt der Pinausbildung, insbesondere die Geometrie und der Querschnitt von mehreren Pins, die die Pinausbildung bilden, sind demnach nicht den herstellungsbedingten Grenzen des Drehens (als zerspanendes Fertigungsverfahren) unterlegen, sondern können strömungsmechanisch optimiert werden. Bei Verwendung von mehreren Pins als Pinausbildung hat das Reibrührwerkzeug gegenüber einem einzelnen zentralen Pin eine höhere Steifigkeit aufgrund des wesentlich höheren Flächenträgheitsmomentes. Dieser Effekt ist in der Mechanik-Festigkeitslehre als "Steiner-Anteil" bekannt.

Die gestalterischen Freiheiten des generativen Fertigungsverfahrens ermöglichen den Aufbau der Werkzeugkombination als Integralbauteil ohne festigkeitsschwächende(n) Fügestelle(n).

Bei derartigen generativen Fertigungsverfahren gibt es auch die Möglichkeit, das Reibrührwerkzeug an unterschiedlichen Stellen mit unterschiedlichen Materialien oder unterschiedlichen Materialkombinationen aufzubauen. Insbesondere können unterschiedliche Materialkombinationen - Gradientenwerkstoffe - verwendet werden. Die Veränderungen in den Materialeigenschaften können dabei durch gezieltes Einbringen und Verwenden von entsprechenden Materialien gezielt beeinflusst und geformt werden, wobei die Veränderungen in radialer oder axialer Richtung nicht nur stufenweise sondern auch allmählich erfolgen können.

Auch können verschiedene Materialien verwendet werden. Beispielsweise können Elektronenstrahlsinterverfahren oder Lasersinterverfahren angewandt werden, um z.B. eine Vielzahl unterschiedlicher möglicher Legierungen verwenden zu können.

Ausführungsbeispiele der Erfindung werden nachfolgend anhand der beigefügten Zeichnungen näher erläutert. Darin zeigen:

Fig. 1     eine Draufsicht auf ein Reibrührwerkzeug hier z.B. in Form eines Zwei-Schulter-Werkzeugs für ein Reibrührschweißverfahren-nach dem Stand der Technik;

Fig. 2     einen Schnitt entlang der Linie II-II durch das Reibrührwerkzeug nach dem Stand der Technik;

Fig. 3     eine Ansicht vergleichbar derjenigen von Fig. 1 eines Reibrührwerkzeugs gemäß einer Ausführungsform der Erfindung in Form eines Zwei-Schulter-Werkzeuges für ein Reibrührschweißverfahren;

Fig. 4     einen Schnitt entlang der Linie IV-IV für eine erste Ausführungsform des Reibrührwerkzeuges gemäß der Erfindung;

Fig. 5     einen Schnitt entlang der Linie IV-IV von Fig. 3 für eine zweite Ausführungsform des Reibrührwerkzeugs gemäß der Erfindung;

Fig. 6     einen Schnitt entlang der Linie IV-IV von Fig. 3 für eine dritte Ausführungsform der Erfindung;

Fig. 7     eine Zusammenstellung von Pins für eine der Pinausbildungen eines Reibrührwerkzeugs gemäß den Figuren 3 bis 6;

Fig. 8     eine vergleichende Darstellung von Schnittansichten durch ein Reibrührwerkzeug gemäß dem Stand der Technik vergleichbar derjenigen von Fig. 2 und durch ein Reibrührwerkzeug gemäß einer Ausführungsform der Erfindung vergleichbar derjenigen von Fig. 4 zwecks Herleitung und Darstellung unterschiedlicher Steifigkeiten der jeweiligen Pinausbildungen der Reibrührwerkzeuge;

Fig. 9     eine schematische Darstellung einer ersten Reibrührwerkzeugherstellvorrichtung zum Herstellen der erfindungsgemäßen Reibrührwerkzeuge gemäß den Darstellungen der Figuren 3 bis 6 mittels eines generativen Fertigungsverfahrens;

Fig. 10    einen Schnitt durch eine Ausführungsform eines erfindungsgemäße Reibrührwerkzeugs, wie es rechts in Fig. 8 dargestellt ist, entlang einer x-z Ebene zur Darstellung eines Reibrührwerkzeuges mit einem Gradientenmaterial;

Fig. 11    eine zweite Ausführungsform einer Reibrührwerkzeugherstellvorrichtung zur Herstellung eines der erfindungsgemäßen Reibrührwerkzeuge gemäß den Ausführungsformen der Figuren 3 bis 6 mittels eines generativen Fertigungsverfahrens;

Fig. 12    einen Schnitt durch ein mit der Reibrührwerkzeugherstellvorrichtung von Fig. 11 herstellbares Reibrührwerkzeug gemäß einer weiteren Ausführungsform der Erfindung, wobei der Schnitt entlang der xz-Ebene von Fig. 8 durchgeführt worden ist, um ein weiteres Beispiel für ein Reibrührwerkzeug mit Gradientenmaterial zu verdeutlichen; und

Fig. 13    einen Schnitt durch eine weitere Ausführungsform eines Reibrührwerkzeugs.

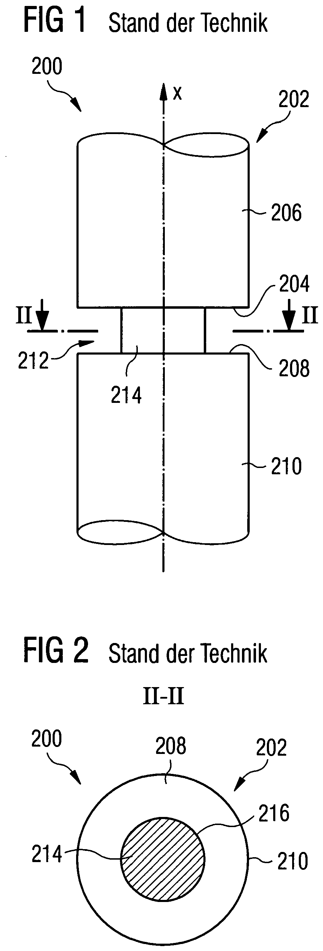

Die Fig. 1 und 2 zeigen ein Reibrührwerkzeug 200 gemäß dem Stand der Technik, wobei das Reibrührwerkzeug 200 als Zwei-Schulter-Werkzeug 202 mit einem eine erste Schulter 204 aufweisenden ersten Werkzeugkörper 206, einem eine zweite Schulter 208 aufweisenden zweiten Werkzeugkörper 210 und einer den ersten Werkzeugkörper 206 und den zweiten Werkzeugkörper 210 verbindenden Pin 212 versehen ist.

Der erste Werkzeugkörper 206 und der davon abstehende Pin 212 des bekannten Reibrührwerkzeuges 200 sind aus einem Stück durch ein Drehverfahren gebildet, wobei der Pin 212 durch spanabhebendes Herausdrehen der ersten Schulter 204 als einzelner kreisförmiger Pin 214 mit einer als einzelnem Kreis ausgebildeten Umrisskonturform 216 ausgebildet ist.

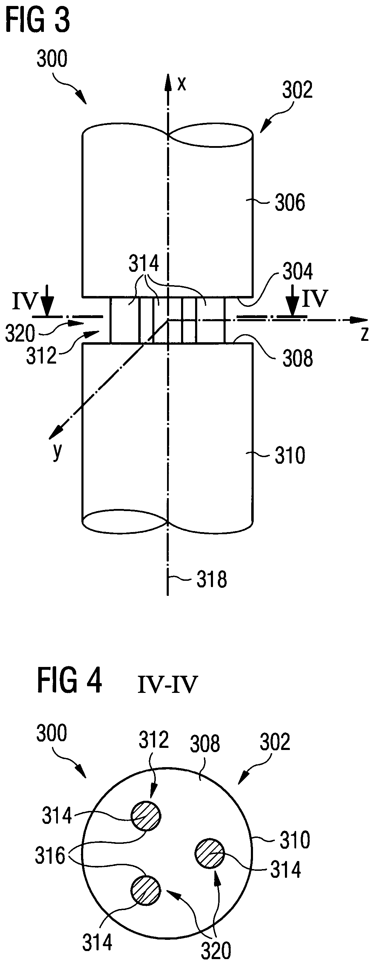

Fig. 3 zeigt dagegen ein Reibrührwerkzeug 300 gemäß einer Ausführungsform der Erfindung, wobei das Reibrührwerkzeug 300 in dem dargestellten Beispiel ebenfalls als Zwei-Schulter-Werkzeug 302 zum Durchführen eines Reibrührschweißverfahrens derart ausgebildet ist, dass eine erste Schulter 304 an einem ersten Werkzeugkörper 306 und eine zweite Schulter 308 an einem zweiten Werkzeugkörper 310 ausgebildet ist und dass der erste Werkzeugkörper 306 und der zweite Werkzeugkörper 310 durch eine Pinausbildung 312 miteinander verbunden sind.

Die Pinausbildung 312 steht vom ersten Werkzeugkörper 306 mit kleinerem Außendurchmesser ab, so dass die erste Schulter 304 rund um die Pinausbildung 312 gebildet ist. Die Pinausbildung 312 ist weiter mit dem mit größerem Außendurchmesser ausgebildeten zweiten Werkzeugkörper 310 verbunden, so dass an diesem rund um die Pinausbildung 312 die zweite Schulter 308 ausgebildet ist. Das Reibrührwerkzeug 300 ist insgesamt durch ein generatives Fertigungsverfahren in einem Stück hergestellt.

Die Herstellung durch ein generatives Fertigungsverfahren gestattet es, die Pinausbildung 312 abweichend von der in Fig. 2 für das bekannte Reibrührwerkzeug 200 dargestellten Form nicht mit einer über eine Kreisfläche gleichmäßig verteilten Materialverteilung, sondern mit einer davon abweichenden Materialverteilung 320 auszubilden.

Insbesondere gestattet es das generative Fertigungsverfahren in einfacher Weise, die Pinausbildung 312 abweichend von der in Fig. 2 für das bekannte Reibrührwerkzeug 200 dargestellten Form mit einer von einer einzelnen Kreisform abweichenden Umrisskonturform 316 auszubilden, wobei die Umrisskonturform 316 beliebig gestaltet werden kann und die Pinausbildung 312 dennoch nicht durch spanabhebende Verfahren im Querschnitt geschwächt wird.

Die Fig. 4 bis 6 zeigen jeweils im Schnitt entlang der Linie IV-IV von Fig. 3 dargestellte unterschiedliche mögliche Ausführungsbeispiele für die Pinausbildung 312.

Die Pinausbildung 312 ist als Gruppe mehrerer Pins 314 ausgebildet, wobei aus Stabilitätsgründen mehr als zwei Pins 314 gemäß der Erfindung wesentlich sind.

Fig. 4 zeigt eine erste Ausführungsform für die Pinausbildung 312 mit insgesamt drei Pins 314 in gleichmäßiger Gruppierung, wobei die einzelnen Pins 314 voneinander beabstandet sind.

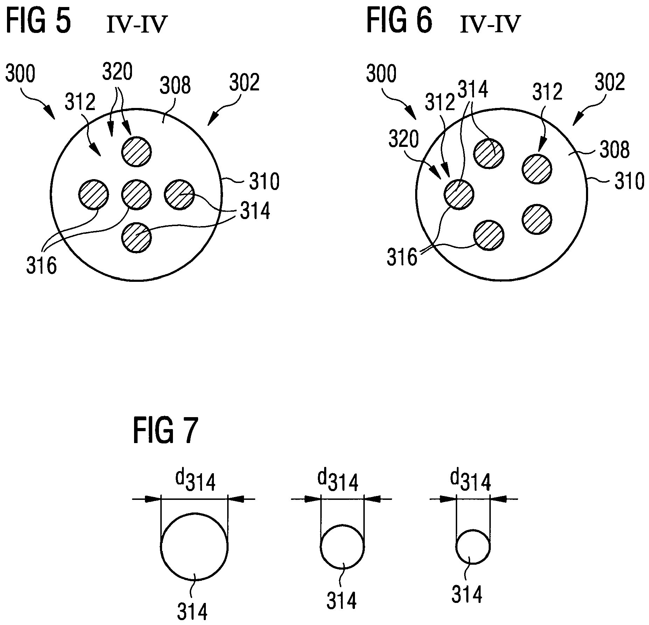

Fig. 5 zeigt ein Beispiel für eine erste Anordnung von insgesamt fünf Pins 314 und Fig. 6 zeigt ebenfalls eine Pinausbildung 312 mit insgesamt fünf Pins 314, wobei hier jedoch die Pins 314 anders angeordnet sind als in Fig. 5.

Die Pins 314 können beliebige Querschnittsformen haben; bei den dargestellten Ausführungsbeispielen ist als Beispiel eine kreisförmige Profilausbildung der Pins 314 mit Außendurchmesser $d_{314}$ dargestellt.

Wie Fig. 7 zeigt, können die Pins 314 unterschiedliche Durchmesser $d_{314}$ aufweisen, es sind hier beispielsweise Durchmesser $d_{314}=6$ mm, $d_{314}=4$ mm und $d_{314}=3$ mm angedeutet; auch Pins 314 mit zwei Millimetern Durchmesser sind denkbar.

Selbstverständlich können die Pins 314 anstelle der gezeigten kreisförmigen Profilquerschnitte auch davon abweichende Profilquerschnittsformen haben.

Sämtliche Beispiele der Fig. 4 bis 6 zeigen Pinausbildungen 312, die in ihrer Umrisskonturform 316 von der bekannten Umrisskonturform 216, die nur eine einzelne Kreisform hat, abweichen.

Die Anordnung der Pins 314, die Auswahl der Querschnittsfläche der Pins 314, die Umrisskonturform 316 und vorzugsweise auch das Material sind je nach zu erwartender Belastung auf das Reibrührwerkzeug 300 ausgewählt und entsprechend festgelegt.

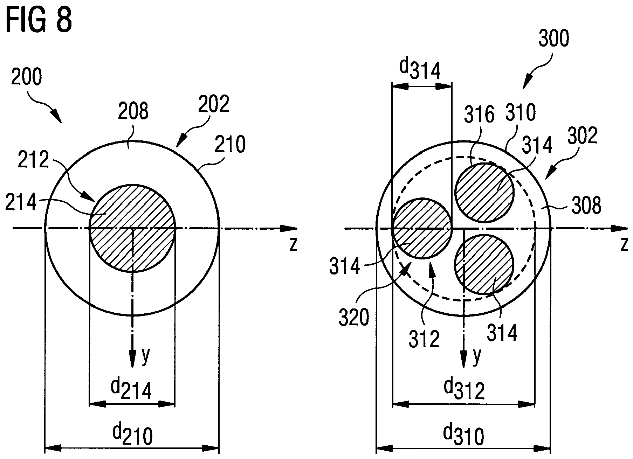

Wie im Folgenden anhand der Fig. 8 näher erläutert wird, ist bei der erfindungsgemäßen Pinausbildung 312 selbst dann, wenn die Querschnittsfläche der Pinausbildung 312 gleich derjenigen der bekannten Pinausbildung 212 oder nur geringfügig größer als die Querschnittsfläche der bekannten Pinausbildung 212 ist, aufgrund von höheren Flächenträgheitsmomenten eine wesentlich höhere Stabilität gegeben.

Beim Reibrührschweißen oder bei anderen Reibrührverfahren wird Wärme durch Reibung erzeugt, wobei insbesondere wenigstens die erste Schulter 304 oder die Reibwärme durch Reiben mit der ersten Schulter 304 und der zweiten Schulter 308 erzeugt wird. Neben der Erzeugung der Reibungswärme haben die Schultern 304, 308 auch die Funktion, das plastifizierte Material im Bearbeitungsbereich zu halten und ein zu großes Abfließen zu vermeiden. Daher sollte die Erfassungsfläche der Schultern 304, 308, mit denen diese die Werkstücke erfassen, nicht zu klein sein. Aufgrund dessen, dass die Pinausbildung 312 mehrere Pins 314 hat, kann diese Erfassungsfläche der Schultern 304, 308 auch dann hochgehalten werden, wenn die Pins 314 wenigstens teilweise näher zu dem Außenumfang der Werkzeugkörper 306, 310 hin angeordnet werden.

Fig. 8 zeigt in der linken Teildarstellung die bekannte Pinausbildung 212 mit reiner kreisförmiger Umrisskonturform 216, wobei der einzelne Pin 214 einen Durchmesser $d_{214}$ von zum Beispiel zum Beispiel 6 mm hat. Der Außendurchmesser $d_{210}$ es entsprechenden Werkzeugkörpers 206, 210 beträgt bei diesem Beispiel 12 mm. In Fig. 8 ist weiter in der rechten Teildarstellung zum Vergleich ein Reibrührwerkzeug 300 gemäß einer Ausführungsform der Erfindung mit einer Ausführungsform der Pinausbildung 312 mit insgesamt drei Pins 314 dargestellt. Auch hier ist der Durchmesser $d_{310}$ der Werkzeugkörper 306, 310 beispielsweise auf ca. 12 mm angenommen. Die Pinausbildung 312 ist in einem Kreis einbeschrieben, der einen Durchmesser $d_{312}$ von ca. 10 mm hat. Der Durchmesser $d_{314}$ der einzelnen Pins 314 ist hier zum Beispiel ca. 4 mm.

Für die Fläche A solcher kreisrunder Pins 214, 314 mit Durchmesser d gilt:

$$\text{Gleichung (1)} \qquad A = d^2 \frac{\pi}{4}$$

Demnach gilt für die Fläche $A_{212}$ der bekannten Pinausbildung 212:

$$\text{Gleichung (2)} \qquad A_{212} = d_{214}^{\ 2} \frac{\pi}{4} = 36mm^2 \frac{\pi}{4} \approx 28,26mm^2$$

Für die Fläche der Pinausbildung 312 der erfindungsgemäßen Ausgestaltung von Fig. 8 gilt:

$$\text{Gleichung (3)} \qquad A_{312} = 3 \cdot d_{314} \frac{\pi}{4} = 3 \cdot (4mm)^2 \cdot \frac{\pi}{4} \approx 37,68mm^2$$

Demnach ist die Fläche $A_{212}$ der bekannten Pinausbildung 212 etwas kleiner als die Fläche $A_{314}$ der erfindungsgemäßen Ausführungsform.

Für das Flächenträgheitsmoment $I_{y,z}$ eines kreisrunden Pins mit dem Durchmesser d gilt:

$$\text{Gleichung (4)} \qquad I_{y,z} = \frac{\pi \cdot d^4}{64}$$

Demnach ist das Flächenträgheitsmoment der bekannten Pinausbildung 212 mit dem Durchmesser $d_{214}$=6 mm:

$$\text{Gleichung (5)} \qquad I_{y;212} = \frac{\pi \cdot (6mm)^4}{64} \approx 63,6mm^4$$

Für die Pinausbildung 312 mit den mehreren Pins 314 gilt wegen des zusätzlichen "Steiner-Anteils":

$$\text{Gleichung (6)} \qquad I_y = \sum (I_{y,i} + a_i^{\ 2} A_i)$$

Wobei i der jeweilige Pin 314 und $a_i$ der Abstand des i-ten Pins 314 von der y-Achse ist.

Demnach beträgt das Flächenträgheitsmoment $I_{y,312}$ für die in Fig. 8 rechts dargestellte Pinausbildung 312:

Gleichung (7)

$$I_{y,312} = (I_{y1} + a_1^{\ 2} A_1) + (I_{y2} + a_2^{\ 2} A_2) + (I_{y3} + a_3^{\ 2} A_3)$$

$$I_{y,312} \approx (\frac{\pi \cdot (4mm)^2}{64} + (1,5mm)^2 \cdot 12,56mm^2) +$$

$$(\frac{\pi \cdot (4mm)^2}{64} + (1,5mm)^2 \cdot 12,56mm^2) + (\frac{\pi \cdot (4mm)^2}{64} + (3mm)^2 \cdot 12,56mm^2)$$

Dies heißt:

Gleichung (8) $\qquad I_{y,312} \approx 207mm^4$

Das Flächenträgheitsmoment $I_{y,312}$ ist bei der Pinausbildung 312 gemäß der erfindungsgemäßen Ausführungsform somit etwa um einen Faktor 3,3 größer als das Flächenträgheitsmoment $I_{y,212}$ der bekannten Pinausbildung 212.

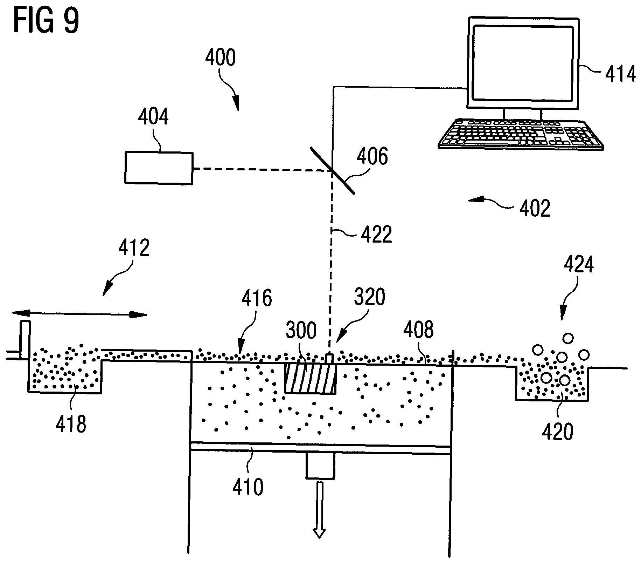

Im Folgenden werden anhand der Figuren 9 bis 12 unterschiedliche Ausführungsformen für eine Herstellvorrichtung zum Herstellen der Reibrührwerkzeuge 300 gemäß den erfindungsgemäßen Ausführungsformen sowie damit durchführbare Herstellverfahren zum Herstellen solcher Reibrührwerkzeuge 300 näher erläutert.

Fig. 9 zeigt eine erste Ausführungsform einer Herstellvorrichtung 400 zur Herstellung eines Reibrührwerkzeugs 300 durch Durchführung eines generativen Fertigungsverfahrens.

Die Herstellvorrichtung 400 ist als Laserstrahl- oder Elektronenstrahl-Pulverbett-Herstellvorrichtung 402 ausgebildet. Die Herstellvorrichtung 400 weist eine Energiestrahlerzeugungseinrichtung 404, eine Energiestrahllenkungseinrichtung 406, ein Pulverbett 408 mit einer verfahrbaren Herstellplattform 410 und einer Pulverauftragseinrichtung 412 auf. Weiter ist eine Steuerungseinrichtung 414 zum Steuern des Herstellverfahrens vorgesehen. Insbesondere steuert die Steuerungseinrichtung 414 die Energiestrahllenkungseinrichtung 406, die Herstellplattform 410 sowie die Pulverauftragseinrichtung 412.

Die Energiestrahlerzeugungseinrichtung 404 ist zum Erzeugen eines Hochenergiestrahls, mit dem Materialpulver zu einer festen Form umgewandelt werden kann. Zum Beispiel dient die Energiestrahlerzeugungseinrichtung zum Erzeugen eines hochenergetischen Laserstrahls oder eines Elektronenstrahls, mit dem Materialpulver 416 geschmolzen und/oder gesintert werden kann.

Das Materialpulver 416 lässt sich aus einem ersten Pulverreservoir 418 und/oder einem zweiten Pulverreservoir 420 mittels der Pulverauftragseinrichtung 412 in dünnen Pulverschichten auf der Herstellplattform 410 anordnen.

In der Steuerungseinrichtung 414 sind Daten über die Form des Reibrührwerkzeugs 300 - beispielsweise CAD-Daten eingegeben; Die Steuerungseinrichtung 414 lenkt daraufhin den Energiestrahl 422 mittels der Energiestrahllenkungseinrichtung 406 so, dass der gesamte Querschnitt des Reibrührwerkzeugs 300 auf Höhe dieser Schicht verfestigt wird. Anschließend fährt die Steuerungseinrichtung 414 die Herstellplattform 410 um einen bestimmten Betrag nach unten, um so die nächste Schicht Pulver aufzutragen und erneut den Querschnitt zu verfestigen.

Mit diesem an sich bekannten Laser- oder Elektronenstrahl-Pulverbettverfahren lässt sich das Reibrührwerkzeug 300 gemäß den Darstellungen in den Figuren 3 bis 8 integral als ein Stück herstellen.

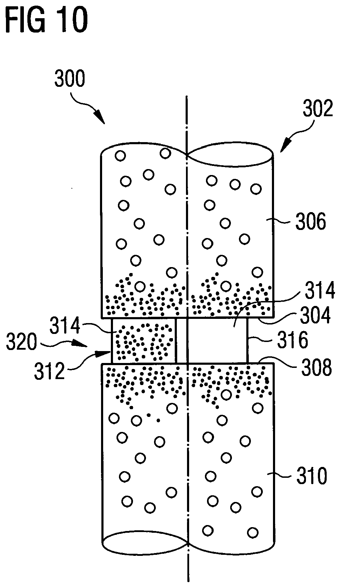

Weiter ist es möglich, bei der in Fig. 9 dargestellten Herstellvorrichtung 400 in verschiedenen Schichten unterschiedliche Materialpulver 416 aufzutragen. Beispielsweise enthält das erste Pulverreservoir 418 ein erstes Materialpulver 416 und das zweite Pulverreservoir 420 enthält ein zweites Materialpulver 424. Demnach lässt sich mittels der Pulverauftragseinrichtung 412 in unterschiedlichen Schichten wahlweise entweder das erste Materialpulver 416 oder das zweite Materialpulver 424 oder auch Gemische mit unterschiedlichen Zusammensetzungen des ersten Materialpulvers 416 und des zweiten Materialpulvers 424 auftragen. Dadurch können entlang der Achse 318 des Reibrührwerkzeugs verändernde Materialeigenschaften erhalten werden, wie dies anhand des Beispiels des Reibrührwerkzeugs 300 in Fig. 10 dargestellt ist.

Fig. 10 zeigt ein Reibrührwerkzeug 300 gemäß einer Ausführungsform der Erfindung, wobei die Gestalt in diesem Beispiel derjenigen entspricht, wie sie in Fig. 8 rechts dargestellt ist. Es ist in Fig. 10 ein Schnitt entlang einer x-z-Ebene von Fig. 8 dargestellt. Dabei sind die aus dem unterschiedlichen Materialpulver in 416, 424 enthaltenen Materialien durch Punkte und Kreise angedeutet.

Zum Beispiel können am Rand der Werkzeugkörper 306, 310 mehr elastische Materialeigenschaften erhalten werden, so dass einer der Werkzeugkörper 306, 310 gut zum Einspannen in einer nicht dargestellten Spanneinrichtung geeignet ist, wobei zum Beispiel im Bereich der Schultern 304, 308 und/oder im Bereich der Pinausbildung 312 ein härteres Material verwendet ist.

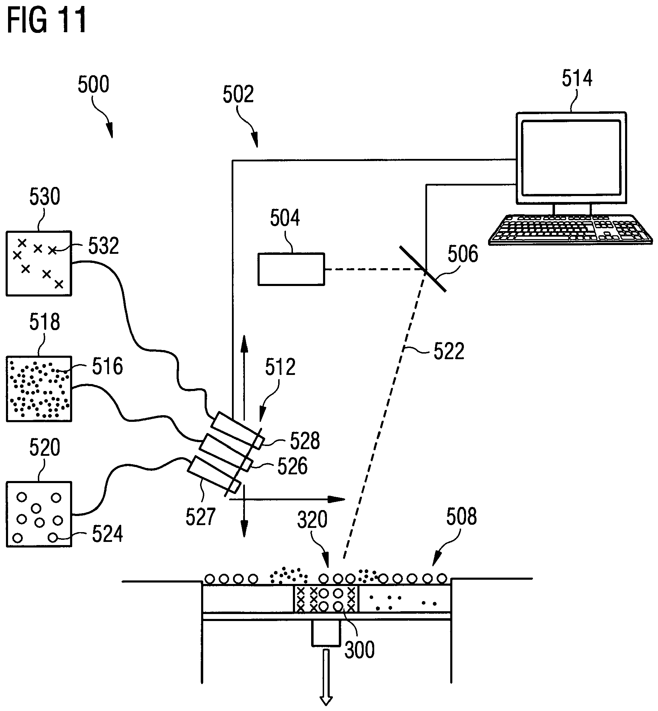

In Fig. 11 ist eine weitere Ausführungsform einer Herstellvorrichtung 500 zum Herstellen des Reibrührwerkzeugs 300 gemäß einer Ausführungsform der Erfindung dargestellt. Auch mit dieser Herstellvorrichtung 500 ist ein generatives Fertigungsverfahren insbesondere in Form eines Laser- oder Elektronenstrahl-Pulverbettverfahrens durchführbar. Entsprechend ist auch diese Herstellvorrichtung 500 bevorzugt als Laser- oder Elektronenstrahl- Pulverbettvorrichtung 502 mit einer Energiestrahlerzeugungseinrichtung 504, einer Energiestrahllenkungseinrichtung 506, einem Pulverbett 508 mit Herstellplattform 510 und einer Pulverauftragseinrichtung 512 zum Auftragen unterschiedlicher Materialpulver 516, 524 ausgestattet. Eine Steuerungseinrichtung 514 lenkt und steuert den Herstellprozess der Herstellvorrichtung 500.

Anders als bei der Herstellvorrichtung 400 ist die Pulverauftragseinrichtung 512 jedoch dergestalt, dass an unterschiedlichen Stellen der Herstellplattform 410 unterschiedliche Materialien angebracht werden können. Hierzu ist die Pulverauftragseinrichtung 512 mit mehreren Pulverdüsen 526, 527, 528 ausgestattet, die an unterschiedliche Pulverreservoirs 518, 520, 530 angeschlossen sind. Hierzu ist eine erste Pulverdüse 526 an ein erstes Pulverreservoir 518 mit einem ersten Materialpulver 516 angeschlossen, um das erste Materialpulver 516 aufzutragen. Eine zweite Pulverdüse 527 ist an ein zweites Pulverreservoir 520 mit einem zweiten Materialpulver 524 angeschlossen, um dieses zweite Materialpulver 524 aufzutragen. Eine dritte Pulverdüse 528 ist an ein drittes Pulverreservoir 530 angeschlossen, um ein drittes Materialpulver 532 aufzutragen. Die Pulverauftragseinrichtung 512 ist durch die Steuerungseinrichtung 514 derart steuerbar, dass an jedem Ort der y-z-Ebene (parallel zur Herstellplattform 519) wahlweise wenigstens eines der Materialpulver - oder Mischungen davon - 516, 524, 532 aufbringbar sind.

Ansonsten ist die Herstellvorrichtung 500 analog zu der Herstellvorrichtung 400 aufgebaut, so dass auch mit dieser Herstellvorrichtung 500 aus CAD-Daten das Reibrührwerkzeug 300 durch ein additives Fertigungsverfahren aufgebaut werden kann.

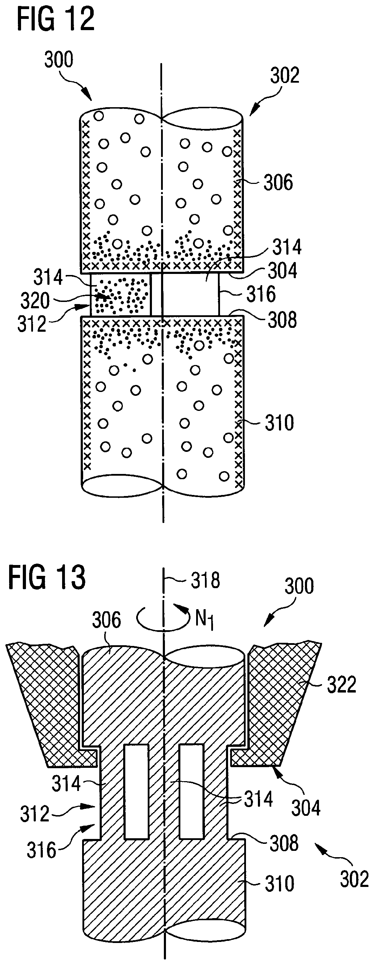

Fig. 12 zeigt einen Schnitt durch ein Reibrührwerkzeug 300 gemäß einer weiteren Ausführungsform, die mit der Herstellvorrichtung 500 der Fig. 11 herstellbar ist. Dabei sind die drei unterschiedlichen Materialien, die durch die drei Materialpulver 516, 524, 532 erhältlich sind, in unterschiedlicher Verteilung innerhalb des Reibrührwerkzeugs 300 angedeutet. Beispielsweise können hier die Oberflächen gehärtet sein oder auf sonstige Weise den zu erwartenden Belastungen im Reibrührwerkzeug 300 angepasst.

Ein Reibrührverfahren lässt sich mit den dargestellten Herstellvorrichtungen 400, 500 und den damit herstellbaren Reibrührwerkzeugen 300 wie folgt gestalten.

Zum Beispiel wäre als Reibrühraufgabe vorgesehen, zwei dicke Metallplatten im Stumpfstoß miteinander zu verbinden. Abhängig von der Dicke des Stoßes und den zu verschweißenden Materialien wirken dann auf das Reibrührwerkzeug 300 und insbesondere auf die Pinausbildungen 312 Belastungen, die durch den Fachmann gut abschätzbar oder berechenbar sind. Die Pinausbildung 312 muss hierzu einerseits die an der Pinausbildung 312 wirkenden Reibkräfte und darüber hinaus noch die Kräfte übertragen, die an der zweiten Schulter 308 wirken.

Entsprechend dieser abzuschätzenden Belastungen auf die Pinausbildung 312 und die Schultern 304, 308 werden die Schultern 304, 308, die Werkzeugkörper 306, 310 sowie die Pinausbildung 312 entworfen.

Die Materialverteilung 320 der Pinausbildung 312 wird beispielsweise durch Auswahl einer der Umrisskonturformen 316 der Figuren 4 bis 6 ausgewählt; außerdem wird der Durchmesser der Pins 314 sowie der Abstand der Pins 314 voneinander und von der Achse 318 des Reibrührwerkzeugs bestimmt.

Alternativ oder zusätzlich zu der Auswahl der Umrisskonturform 316 der Pinausbildung 312 kann auch eine vorbestimmte über den Querschnitt sich verändernde Materialverteilung 320 durch unterschiedliches Einbringen der unterschiedlichen Materialpulver und/oder Mischungen daraus erhalten werden.

Insbesondere werden die Materialien entsprechend der zu erwartenden Belastungen ausgewählt. Entsprechend wird das Reibrührwerkzeug 300 in einem CAD-Programm entworfen; anschließend werden die Daten auf einer der Steuerungseinrichtungen 414, 514 gegeben, um dann das generative Fertigungsverfahren zum Herstellen des entworfenen Reibrührwerkzeugs 300 durchzuführen.

Anschließend wird das so hergestellte Reibrührwerkzeug 300 in einer Werkzeugfassung (nicht dargestellt), beispielsweise einen Roboterarm mit Dreheinrichtung am Roboterarmende - eingespannt, um die Reibrühraufgabe des Reibrührverfahrens durchzuführen.

In Fig. 13 ist noch eine weitere Ausführungsform des Reibrührwerkzeuges 300, bei dem der erste Werkzeugkörper 306, der zweite Werkzeugkörper 310 und die den ersten Werkzeugkörper 306 mit dem zweiten Werkzeugkörper 310 verbindende Pinausbildung 312 mit wenigstens drei oder mehr voneinander beabstandeten Pins 314 als einstückiges monolithisches Bauteil ohne Trenn- oder Fügestellen hergestellt sind. Jedoch ist hier die erste Schulter 304 nicht unmittelbar an dem ersten Werkzeugkörper 306 ausgebildet, sondern an einem gesonderten Bauteil 322, wobei das Bauteil 322 eine Drehzahl gleich Null relativ zum ersten Werkzeugkörper 306 aufweist. Die erste Schulter 304 ist feststehend ausgebildet. Dadurch ist ein Drehzahlunterschied $\Delta N$ zwischen der Drehzahl $N_1$ der Pinausbildung 314 und der Drehzahl der ersten Schulter 304 vorhanden. Für weitere Einzelheiten und Vorteile dieser Ausbildung mit unterschiedlichen Drehzahlen wird auf die DE 10 2005 030 800 A1 verwiesen.

Das Bauteil mit den Werkzeugkörpern 306, 310 und das gesonderte Bauteil 322 mit der ersten Schulter 304 können gemeinsam in einem Herstellungsprozess, insbesondere unter Verwendung generativer Fertigungsverfahren wie zuvor erläutert, funktionsintegriert aufgebaut werden.

Zusammenfassend wird ein belastungsoptimiertes Zwei-Schulter-Reibrührschweißwerkzeug 302 gemäß Anspruch 1 vorgeschlagen. Die Pinausbildung 312 weist im Querschnitt eine sich von einer über eine Kreisform gleichmäßigen Verteilung abweichende Materialverteilung 320, wie z.B. eine von einer einzelnen Kreisform abweichende Umrisskonturform 316 oder ein Gradientenmaterial, auf. Weiter werden ein Herstellverfahren für das Reibrührwerkzeug 300 und ein mit dem Reibrührwerkzeug 300 durchführbares Reibrührverfahren vorgeschlagen. Somit wird eine weitaus größere Vielfalt von Materialbearbeitungen und Materialverbindungen als bisher durch Reibrührschweißen ermöglicht.

**Bezugszeichenliste:**

200 Reibrührwerkzeug (Stand der Technik)
202 Zwei-Schulter-Werkzeug (Stand der Technik)
204 erste Schulter (Stand der Technik)
206 erster Werkzeugkörper (Stand der Technik)
208 zweite Schulter (Stand der Technik)
210 zweiter Werkzeugkörper (Stand der Technik)
212 Pin
214 Pin
216 Umrisskonturform
300 Reibrührwerkzeug
302 Zwei-Schulter-Werkzeug
304 erste Schulter
306 erster Werkzeug körper
308 zweite Schulter
310 zweiter Werkzeug körper
312 Pinausbildung
314 Pin
316 Umrisskonturform
318 Achse
320 Materialverteilung
322 gesondertes Bauteil mit Schulter
400 Herstellvorrichtung
402 Laser- oder Elektronenstrahl-Pulverbett-Vorrichtung
404 Energiestrahlerzeugungseinrichtung
406 Energiestrahllenkungseinrichtung
408 Pulverbett
410 Herstellplattform
412 Pulverauftragseinrichtung
414 Steuerungseinrichtung
416 Materialpulver
418 erstes Pulverreservoir
420 zweites Pulverreservoir
422 Energiestrahl
424 zweites Materialpulver
500 Herstellvorrichtung
502 Laser- oder Elektronenstrahl-Pulverbett-Vorrichtung
504 Energiestrahlerzeugungseinrichtung
506 Energiestrahllenkungseinrichtung
508 Pulverbett
510 Herstellplattform
512 Pulverauftragseinrichtung
514 Steuerungseinrichtung
516 erstes Materialpulver
518 erstes Pulverreservoir
520 zweites Pulverreservoir
522 Energiestrahl
524 zweites Materialpulver
526 erste Pulverdüse
527 zweite Pulverdüse
528 dritte Pulverdüse
530 drittes Pulverreservoir
532 drittes Materialpulver

**Patentansprüche**

1. Reibrührwerkzeug (300), umfassend einen ersten Werkzeugkörper (306) zum Vorsehen einer ersten Schulter (304), eine vom ersten Werkzeugkörper (306) abstehende und gegenüber dem Außendurchmesser des ersten Werkzeugkörpers (306) einen kleineren Außendurchmesser aufweisende Pinausbildung (312) und einen durch die Pinausbildung (312) mit dem ersten Werkzeugkörper (306) verbundenen zweiten Werkzeugkörper (310) zum Vorsehen einer zweiten Schulter (308), so dass das Reibrührwerkzeug als Zwei-Schulter-Werkzeug (302) ausgebildet ist, wobei die Pinausbildung (312) im Querschnitt eine von einer gleichmäßigen kreisförmigen Verteilung abweichende Materialverteilung (320) aufweist,
**dadurch gekennzeichnet,**
**dass** der erste Werkzeugkörper (306), die Pinausbildung (312) und der zweite Werkzeug körper (310) aus einem monolithischen oder einstückigen Block zusammen integral derart gebildet sind, dass die Pinausbildung (312) wenigstens drei vom ersten Werkzeugkörper abstehende Pins (314) aufweist.

2. Reibrührwerkzeug (300) nach Anspruch 1,
**dadurch gekennzeichnet,**
**dass** der erste Werkzeugkörper (306), der zweite Werkzeugkörper (312) und die Pinausbildung (312) integral mittels generativem Fertigungsverfahren gebildet sind.

3. Reibrührwerkzeug (300) nach einem der voranstehenden Ansprüche,
**dadurch gekennzeichnet,**
**dass** am ersten Werkzeugkörper (306) eine erste Schulter (304) vorgesehen ist, wobei die erste Schulter (304) integral am ersten Werkzeugkörper (306) oder an einem gesonderten Bauteil (322) ausgebildet ist, wobei das Bauteil (322) eine Drehzahl gleich Null relativ zum ersten Werkzeugkörper (306) aufweist, und dass an dem zweiten Werkzeugkörper (310) eine zweite Schulter (308) vorgesehen ist und dass der erste Werkzeugkörper (306) und die zweite Schulter (308) durch die mehreren beabstandet zueinander ausgebildeten Pins (314) integral verbunden sind.

4. Reibrührwerkzeug (300) nach einem der voranstehenden Ansprüche,
**dadurch gekennzeichnet,**
**dass** das Reibrührwerkzeug (300) eine sich axial oder radial - insbesondere allmählich - verändernde Materialzusammensetzung aufweist.

5. Herstellverfahren zum Herstellen eines Reibrührwerkzeugs (300), das wenigstens einen ersten Werkzeugkörper (306) sowie eine vom ersten Werkzeugkörper (306) abstehende Pinausbildung (312) aufweist, umfassend integrale Herstellung wenigstens des ersten Werkzeugkörpers (306) und der Pinausbildung (312) mittels eines generativen Fertigungsverfahrens,
**gekennzeichnet durch** integrale Fertigung des ersten Werkzeugkörpers (306), der Pinausbildung (312) und eines über der Pinausbildung (312) mit dem ersten Werkzeugkörper (306) verbundenen zweiten Werkzeugkörpers (310) mittels des generativen Fertigungsverfahrens, wobei das generative Fertigungsverfahren derart durchgeführt wird, dass mehr als zwei beabstandet zueinander angeordnete vom ersten Werkzeugkörper (306) abstehende Pins (314) angefertigt werden, die die Pinausbildung (312) bilden.

6. Herstellverfahren nach Anspruch 5,
**gekennzeichnet durch** Verwenden eines pulverbasierten Verfahrens als generatives Fertigungsverfahren zum Herstellen des Reibrührwerkzeugs (300).

7. Herstellverfahren nach einem der Ansprüche 5 oder 6, zum Herstellen eines Reibrührwerkzeugs für eine vorgegebene Reibrühraufgabe,
**gekennzeichnet durch** Abschätzen oder Berechnen der bei der Reibrühraufgabe auf die Pinausbildung (312) wirkenden Belastungen und
Bestimmen einer - insbesondere sich über den Gesamtquerschnitt der Pinausbildung ändernden - Materialverteilung (320) der Pinausbildung (312) in Abhängigkeit von den abgeschätzten oder berechneten Belastungen und
Durchführen des generativen Fertigungsverfahrens derart, dass die Pinausbildung (312) mit der bestimmten Materialverteilung (320) hergestellt wird.

8. Herstellverfahren nach Anspruch 7,
**dadurch gekennzeichnet,**
**dass** das Bestimmen der Materialverteilung (320) umfasst:

   a) Auswahl einer Anzahl von beabstandeten Pins (314), die gemeinsam die Pinausbildung (312) bilden,
   b) Auswahl einer Querschnittskontur und/oder einer Querschnittsfläche für wenigstens einen von mehreren beabstandeten Pins (314), die gemeinsam die Pinausbildung (312) bilden,

c) Bestimmen der Anordnung und/oder der Abstände mehrerer Pins (314), die gemeinsam die Pinausbildung (312) bilden, und/oder

d) Bestimmen einer sich radial oder axial ändernden Materialverteilung (320) für wenigstens einen Pin (314) der Pinausbildung (312).

9. Herstellverfahren nach einem der Ansprüche 5 bis 8, **gekennzeichnet durch** Verwenden unterschiedlicher Materialien und/oder unterschiedlicher Materialkombinationen beim generativen Fertigungsverfahren an unterschiedlichen Stellen des Reibrührwerkzeugs (300), um wenigstens eine sich in dem Reibrührwerkzeug (300) radial oder axial verändernde Materialeigenschaft zu erhalten.

10. Reibrührverfahren, **gekennzeichnet durch** Reibrühren mittels eines Reibrührwerkzeugs (300) nach einem der Ansprüche 1 bis 4 und/oder mittels eines durch ein Herstellverfahren nach einem der Ansprüche 5 bis 8 hergestellten Reibrührwerkzeugs (300).

## Claims

1. Friction-stir tool (300), comprising a first tool body (306) for providing a first shoulder (304), a pin formation (312) projecting from the first tool body (306) and having a smaller outer diameter compared to the outer diameter of the first tool body (306), and a second tool body (310) connected by the pin formation (312) to the first tool body (306) for providing a second shoulder (308) so that the friction-stir tool is configured as a two-shoulder tool (302), wherein the pin formation (312) has a material distribution in cross section that is different from a uniform circular distribution (320), **characterized in that** the first tool body (306), the pin formation (312) and the second tool body (310) together are integrally formed from a monolithic or one-piece block in such a manner that the pin formation (312) has at least three pins (314) projecting from the first tool body.

2. Friction-stir tool (300) according to claim 1, **characterized in that** the first tool body (3069, the second tool body (312) and the pin formation (312) are integrally formed via generative production.

3. Friction-stir tool (300) according to one of the preceding claims, **characterized in that** a first shoulder (304) is provided on the first tool body (306), the first shoulder (304) being embodied integrally on the first tool body (306) or on a separate component (322), said separate component (322) having a rotational speed equal to zero relative to the first tool body (306), and that a second shoulder (308) is provided on the second tool body (310) and that the first tool body (306) and the second shoulder (308) are integrally connected by several mutually spaced-apart pins (314).

4. Friction-stir tool (300) according to one of the preceding claims, **characterized in that** the friction-stir tool (300) has a material composition that changes axially or radially - in particular gradually.

5. Manufacturing method for manufacturing a friction-stir tool (300) having at least a first tool body (306) and a pin formation (312) projecting from the first tool body (306), the method comprising integrally manufacturing at least the first tool body (306) and the pin formation (312) via a generative production method, **characterized by** the integral production of the first tool body (306), the pin formation (312) and a second tool body (304) connected by the pin formation (312) to the first tool body (306) via said generative production method, wherein the generative production method is carried out in such a manner that more than two mutually spaced-apart pins (314) projecting from the first tool body (306) are produced which form the pin formation (312).

6. Manufacturing method according to claim 5, **characterized by** using a powder-based method as the generative production method for manufacturing the friction-stir tool (300).

7. Manufacturing method according to one of the claims 5 or 6, for producing a friction-stir tool for a predetermined friction-stir task, **characterized by** estimating or calculating loads acting during the friction-stir task on the pin formation (312), and determining a material distribution (320) of the pin formation (312) - particularly one that changes over the overall cross section of the pin formation, as a function of the estimated or calculated loads, and executing the generative production method such that the pin formation (312) is manufactured with the determined material distribution (320).

**8.** Manufacturing method according to claim 7,
**characterized in that** the determination of the material distribution (320) comprises:

a) selection of a number of spaced-apart pins (314) which, together, form the pin formation (312),
b) selection of a cross-sectional contour and/or of a cross-sectional surface for at least one of several spaced-apart pins (314) which, together, form the pin formation (312),
c) determination of the arrangement and/or of the spacing of several pins (314) which, together, form the pin formation (312), and/or
d) determination of a material distribution (320) that changes radial or axially for at least one pin (314) of the pin formation (312).

**9.** Manufacturing method according to one of the claims 5 to 8,
**characterized by** using different materials and/or different combinations of materials in the generative production method at different points of the friction-stir tool (300) in order to obtain at least one material characteristic changing radially or axially in the friction-stir tool (300).

**10.** Friction-stir method, **characterized by** friction-stirring using a friction-stir tool (300) according to one of the claims 1 to 4 and/or using a friction-stir tool (300) manufactured by a manufacturing method according to one of the claims 5 to 8.

**Revendications**

**1.** Outil de soudage par friction et agitation (300), comportant un premier corps d'outil (306) pour présenter un premier épaulement (304), un ensemble de broche (312) faisant saillie du premier corps d'outil (306) et présentant un diamètre extérieur plus petit que le diamètre extérieur du premier corps d'outil (306), et un second corps d'outil (310) relié au premier corps d'outil (306) par l'ensemble de broche (312) et destiné à présenter un second épaulement (308), de sorte que l'outil de soudage par friction et agitation est réalisé sous forme d'outil à deux épaulements (302), l'ensemble de broche (312) présentant en section transversale une répartition de matière (320) qui diffère d'une répartition circulaire régulière,
**caractérisé en ce que**
le premier corps d'outil (306), l'ensemble de broche (312) et le second corps d'outil (310) sont réalisés conjointement intégralement à partir d'un bloc monolithique ou d'un seul tenant, de telle sorte que l'ensemble de broche (12) comprend au moins trois broches (314) faisant saillie du premier corps d'outil.

**2.** Outil de soudage par friction et agitation (300) selon la revendication 1,
**caractérisé en ce que**
le premier corps d'outil (306), le second corps d'outil (310) et l'ensemble de broche (312) sont réalisés intégralement au moyen d'un procédé de fabrication génératif.

**3.** Outil de soudage par friction et agitation (300) selon l'une des revendications précédentes,
**caractérisé en ce que**
un premier épaulement (304) est prévu sur le premier corps d'outil (306), le premier épaulement (304) étant réalisé intégralement sur le premier corps d'outil (306) ou sur un composant séparé (322), le composant (322) présentant une vitesse de rotation égale à zéro par rapport au premier corps d'outil (306), et **en ce que**
un second épaulement (308) est prévu sur le second corps d'outil (310), et **en ce que**
le premier corps d'outil (306) et le second épaulement (308) sont reliés intégralement par les plusieurs broches (314) réalisées à distance les unes des autres.

**4.** Outil de soudage par friction et agitation (300) selon l'une des revendications précédentes,
**caractérisé en ce que**
l'outil de soudage par friction et agitation (300) comprend une composition de matière qui se modifie axialement ou radialement, en particulier progressivement.

**5.** Procédé de réalisation d'un outil de soudage par friction et agitation (300), comportant au moins un premier corps d'outil (306) ainsi qu'un ensemble de broche (312) faisant saillie du premier corps d'outil (306), comprenant la réalisation intégrale au moins du premier corps d'outil (306) et de l'ensemble de broche (312) par un procédé de fabrication génératif,

**caractérisé par**
la fabrication intégrale du premier corps d'outil (306), de l'ensemble de broche (312) et d'un second corps d'outil (308) relié au premier corps d'outil (306) par l'ensemble de broche (312), par le procédé de fabrication génératif, le procédé de fabrication génératif étant mis en oeuvre de manière à fabriquer plus de deux broches (314) agencées à distance l'une de l'autre et faisant saillie du premier corps d'outil (306), qui constituent l'ensemble de broche (312).

6. Procédé de réalisation selon la revendication 5,
**caractérisé par** l'utilisation d'un procédé à base de poudre à titre de procédé de fabrication génératif pour réaliser l'outil de soudage par friction et agitation (300).

7. Procédé de réalisation selon l'une des revendications 5 ou 6 pour réaliser un outil de soudage par friction et agitation destiné à une tâche donnée de soudage par friction et agitation,
**caractérisé par** l'estimation ou le calcul des charges qui agissent sur l'ensemble de broche (312) pendant la tâche de soudage par friction et agitation, et
par la détermination d'une répartition de matière (320) de l'ensemble de broche (312) en fonction des charges estimées ou calculées - ladite répartition se modifiant en particulier sur la section transversale totale de l'ensemble de broche, et
par la mise en oeuvre du procédé de fabrication génératif de manière à réaliser l'ensemble de broche (312) avec la répartition de matière déterminée (320).

8. Procédé de réalisation selon la revendication 7,
**caractérisé en ce que**
la détermination de la répartition de matière (320) consiste à :

    a) choisir un certain nombre de broches (314) espacées qui constituent conjointement l'ensemble de broche (312),
    b) choisir un contour de section transversale et/ou une surface de section transversale pour au moins une parmi plusieurs broches (314) espacées qui constituent conjointement l'ensemble de broche (312),
    c) déterminer l'agencement et/ou les distances de plusieurs broches (314) qui constituent conjointement l'ensemble de broche (312), et/ou
    d) déterminer une répartition de matière (320) pour au moins une broche (314) de l'ensemble de broche (312), répartition qui se modifie radialement ou axialement.

9. Procédé de réalisation selon l'une des revendications 5 à 8,
**caractérisé par** l'utilisation de différentes matières et/ou de différentes combinaisons de matières lors du procédé de fabrication génératif à différents emplacements de l'outil de soudage par friction et agitation (300), afin d'obtenir au moins une propriété matérielle qui se modifie radialement ou axialement dans l'outil de soudage par friction et agitation (300).

10. Procédé de soudage par friction et agitation,
**caractérisé par** le soudage par friction et agitation au moyen d'un outil de soudage par friction et agitation (300) selon l'une des revendications 1 à 4 et/ou au moyen d'un outil de soudage par friction et agitation (300) réalisé par un procédé de réalisation selon l'une des revendications 5 à 8.

## FIG 1  Stand der Technik

## FIG 2  Stand der Technik

II-II

## FIG 3

## FIG 4   IV-IV

FIG 5  IV-IV

300  320  308  302
312

310
314

316

FIG 6  IV-IV

300  314  312  302
312
320  308
310

316

FIG 7

$d_{314}$    $d_{314}$    $d_{314}$

314    314    314

# FIG 8

FIG 9

## FIG 10

FIG 11

## FIG 12

## FIG 13

**IN DER BESCHREIBUNG AUFGEFÜHRTE DOKUMENTE**

**In der Beschreibung aufgeführte Patentdokumente**

- WO 9310935 A1
- DE 102005030800 B4
- DE 10139687 C1
- DE 10035332 C2
- DE 10031689 B4
- US 20090212089 A1
- GB 2306366 A
- US 20060065694 A1
- US 6676004 B1
- US 20030209588 A1
- US 20120248175 A1
- FR 2916993
- WO 2006116288 A2
- DE 102005030800 A1

**In der Beschreibung aufgeführte Nicht-Patentliteratur**

- **OUYANG et al.** Application of Laser-based Additive Manufacturing to Production of Tools for Friction Stir Welding. *Materials & Design,* 07. August 2002, ISSN 0264-1275